# EUROPÄISCHE PATENTSCHRIFT

(11) **EP 0 456 774 B1**
(45) Veröffentlichungstag und Bekanntmachung des Hinweises auf die Patenterteilung: **08.09.1993**
(21) Anmeldenummer: 90915288.6
(22) Anmeldetag: 25.10.1990
(51) Int. Cl.: B60T 8/00

(54) **VORRICHTUNG ZUM BESTIMMEN DER HAFTREIBUNG ZWISCHEN FAHRZEUGREIFEN UND FAHRBAHNDECKE**
DEVICE FOR DETERMINING THE ADHESION BETWEEN A TYRE AND A ROAD SURFACE
DISPOSITIF DE DETERMINATION DE L'ADHERENCE PNEU/ROUTE

(30) Priorität: 02.12.1989 DE 3939917
(43) Veröffentlichungstag der Anmeldung: 21.11.1991
(73) Patentinhaber: ROBERT BOSCH GMBH, 70442 Stuttgart (DE)
(72) Erfinder: WINNER, Hermann, D-7500 Karlsruhe 41 (DE); WITTE, Stefan, D-7500 Karlsruhe (DE)
(86) Internationale Anmeldenummer: DE9000813
(87) Internationale Veröffentlichungsnummer: WO9108129

(56) Entgegenhaltungen:
- EP-A- 201 843
- WO-A-89/01888
- WO-A-89/09710
- DE-A- 3 226 074
- US-A- 3 893 330

## Beschreibung

### Stand der Technik

Die Erfindung geht aus von einer Vorrichtung zum Bestimmen der Haftreibung zwischen einem auf einer Fahrbahn sich abrollenden Fahrzeugreifen und der Fahrbahndecke, siehe z.B. WO 89/09710.

Zur Sicherstellung einer maximalen Kraftschlußbeanspruchung des Fahrzeugs bei Brems-, Beschleunigung- und Lenkmanövern ist die Kenntnis des momentanen Haftreibungskoeffizienten oder Haftreibungsbeiwerts zwischen den Reifen des Fahrzeugs und der Fahrbahn, der bedingt durch Witterung und Straßen- und Reifenbeschaffenheit ständig variiert, von wesentlicher Bedeutung. Je genauer dabei die gewonnene Aussage über die momentan herrschende Haftreibung ist, desto zuverlässiger können die entsprechenden Anlagen und Einrichtungen des Fahrzeugs auch im Grenzbereich arbeiten.

Bei Bremsanlagen mit Antiblockiersystem und ggf. Antriebsschlupfregelung wird die Haftreibung zwischen Reifen und Fahrbahndecke indirekt über eine Schlupfsensierung der Räder erfaßt. Sobald an einem Rad Schlupf sensiert wird, ist die Haftreibung überschritten. Allerdings erhält man dabei keine Aussage über die Größe des Haftreibungskoeffizienten.

Für zukunftsweisende Sicherheitsanforderungen im Straßenverkehr, z.B. Anzeige des zum vorausfahrenden Fahrzeug einzuhaltenden Mindestabstand, der von dem erforderlichen Bremsweg bestimmt wird und damit unmittelbar von der momentanen Haftreibung zwischen Fahrzeug und Fahrbahndecke abhängt, ist aber die genaue Kenntnis des momentanen Haftreibungskoeffizienten zwischen Reifen den Straße wesentlich. Bekannte Methoden schätzen hierzu den Haftreibungsbeiwert indirekt über die Beobachtung von Temperatur, Rauhigkeit, Feuchtigkeit der Straße u.ä..

### Vorteile der Erfindung

Die erfindungsgemäße Vorrichtung mit den kennzeichnenden Merkmalen des Anspruchs 1 hat den Vorteil, daß der momentane Haftreibungskoeffizient zwischen Reifen und Fahrbahn direkt gemessen wird und zwar unmittelbar am Reifen-Straßen-Kontakt, so daß nicht auf abgeleitete Größen zurückgegriffen werden muß. Dies geschieht mittels spezieller Meßnoppen innerhalb des Reifenprofils, deren Geometrie so bestimmt ist, daß sie bei gleicher Auflagefläche die Auflagkraft des Fahrzeugs in einem ganz bestimmten Verhältnis in eine tangentiale und vertikale Kraftkomponente zerlegen. Ist der Haftreibungskoeffizient zwischen dem Meßnoppen und der Fahrbahn kleiner als das durch die Noppengeometrie bedingte Verhältnis der Kraftkomponenten, was nachfolgend als Reibungskoeffizient des Meßnoppens bezeichnet wird, so verschiebt sich die Auflagefläche des Meßnoppens und der Meßnoppen gleitet während der Abrollbewegung des Reifens.

Gemäß der Erfindung weisen die Meßnoppen unterschiedliche Reibungskoeffizienten auf und die Anzahl der im Reifenprofil vorhandenen Meßnoppen deckt einen weiten Skalenbereich von Reibungskoeffizienten ab. Werden erfindungsgemäß alle gleitenden Meßnoppen detektiert, so ist der momentane Haftreibungskoeffizient zwischen Meßnoppen und Straße durch den Wert des Reibungskoeffizienten desjenigen gleitenden Meßnoppens am stärksten angenähert, der aufgrund seiner geometrischen Gestaltung den größten Reibungskoeffizienten aufweist. Mit diesem Maximalwert des Reibungskoeffizienten aller gleiten Meßnoppen kann dann der Kraftschlußbeiwert zwischen dem gesamten Fahrzeugreifen und der Fahrbahndecke berechnet werden.

Mit einem einfachen theoretischen Modell läßt sich nachweisen, daß der Haftreibungskoeffizient zwischen Reifen und Straße hinreichend genau erfaßt wird, wenn er als die Hälfte des ermittelten Haftreibungskoeffizienten zwischen Meßnoppen und Fahrbahn angenommen wird. Eine höhere Genauigkeit erhält man dann, wenn der gemessene Haftreibungskoeffizient Meßnoppen/Straße mittels einer empirisch ermittelten Tabelle ggf. unter Berücksichtigung der Fahrgeschwindigkeit umgerechnet wird. Die Tabelle kann z.B. durch Ausmessung von ABS-Bremsungen ermittelt werden.

Durch die in den weiteren Ansprüchen aufgeführten Maßnahmen sind vorteilhafte Weiterbildungen und Verbesserungen der im Anspruch 1 angegebenen Vorrichtung möglich.

Die Sensierung des Zustandes der Meßnoppen hinsichtlich Gleiten/Nichtgleiten erfolgt gemäß einer bevorzugten Ausführungsform der Erfindung durch Sensierung einer Verschiebung der Auflageflächen der Meßnoppen während des Abrollens des Fahrzeugreifens. Diese Verschiebung wird z.B. durch Messung der elastischen Verformung der Meßnoppen oder durch Messung der Widerstandsänderung in einem im Meßnoppen eingelagerten Material mit druckabhängigem Widerstand. Es ist auch möglich, in Reifenabrollrichtung zwei Meßnoppen mit gleicher geometrischer Gestaltung anzuordnen, deren Neigungsrichtungen jedoch zueinander gegenläufig sind. Beim Gleiten der Meßnoppen bewegen sich die Gleitflächen aufeinander zu. Dies kann durch Schließen eines elektrischen Schaltkontaktes erkannt werden, dessen beide Kontaktelemente jeweils auf einem der beiden Meßnoppen auf einander zugekehrten Seiten angeordnet sind.

Um verfälschende Einflüsse äußerer Krafteinwirkung auf die Reifen (Seitenbeanspruchung, Brems- oder Antriebsbeanspruchung) zu kompensieren, ist gemäß einer bevorzugten Ausführungsform der Erfindung für jeden Reibungskoeffizientenwert mindestens ein Paar Meßnoppen vorhanden, deren Neigungsrichtung in Reifenabrollrichtung und/oder quer dazu zueinander gegenläufig ist. In jedem Meßnoppen eines Paares addiert sich dann eine Radkraft einmal positiv und einmal negativ zu der von dem Fahrzeuggewicht hervorgerufenen tangentialen Kraftkomponente, so daß der eine Meßnoppen einen zu niedrigen und der andere Meßnoppen einen zu hohen Reibungskoeffizienten liefern würde. Über die erfindungsgemäße Auswertung aller gleitenden Meßnoppen getrennt nach gleicher Neigungsrichtung erhält man zwei getrennte maximale Reibungskoeffizienten. Bei der Mittelwertbildung aus diesen maximalen Reibungskoeffizienten wird die Radkraft eliminiert. Der Mittelwert wird dann zur korrekten Berechnung der Haftreibung zwischen Fahrzeugreifen und Straße benutzt.

Dieses sog. Differentialprinzip läßt sich zur Kompensation sowohl von Reifenlängskräften als auch zur Kompensation von Seitenkräften sowie zur Kombination beider anwenden. Im Grenzfall können die Meßnoppen hohlkegelstumpfförmig ausgebildet werden, was zu einer vereinfachten Fertigung - gegenüber von vier getrennten, in vier verschiedenen Richtungen geneigten Meßnoppen - führt.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt eines Reifenprofils eines auf einer Fahrbahndecke sich abrollenden Fahrzeugreifens mit im Reifenprofil integrierten Meßnoppen, vergrößert dargestellt,
- Fig. 2 und Fig. 3: jeweils ein Blockschaltbild einer Vorrichtung zum Bestimmen der Haftreibung zwischen Fahrzeugreifen und Fahrbahndecke gemäß zweier, Ausführungsbeispiele,
- Fig. 4: ausschnittweise einen Längsschnitt eines Reifenprofils mit Meßnoppenanordnung gemäß einem weiteren Ausführungsbeispiel,
- Fig. 5: eine Unteransicht des Reifenprofilausschnitts mit Meßnoppenanordnung in Fig. 4,
- Fig. 6 und Fig. 7: jeweils eine gleiche Darstellung wie Fig. 5 für eine Meßnoppenanordnung gemäß weiterer Ausführungsbeispiele.

### Beschreibung der Ausführungsbeispiele

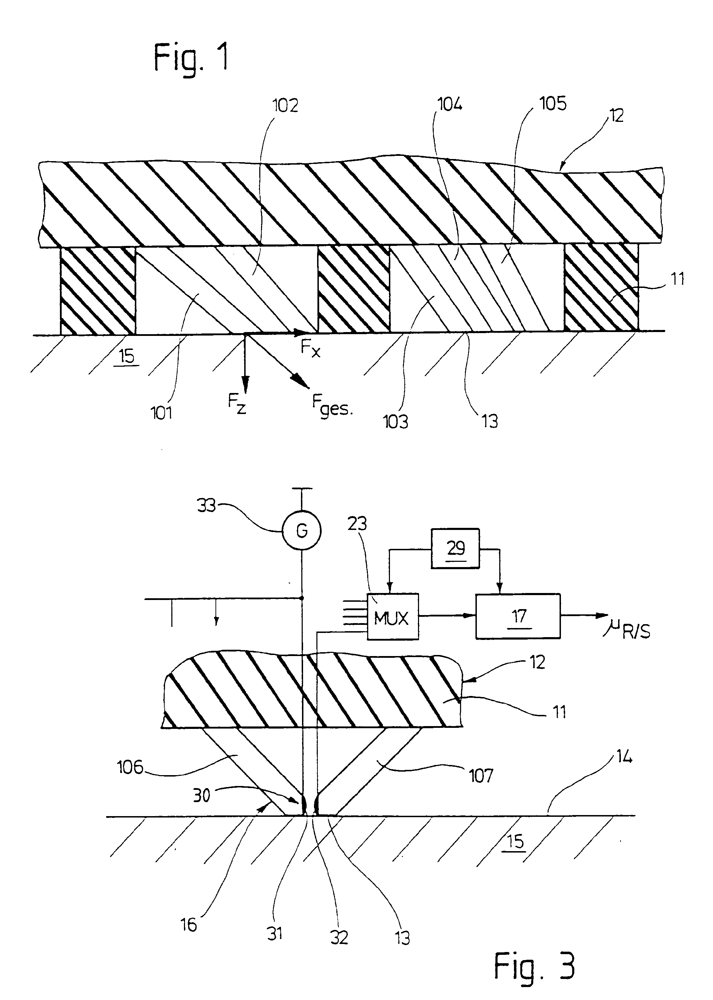

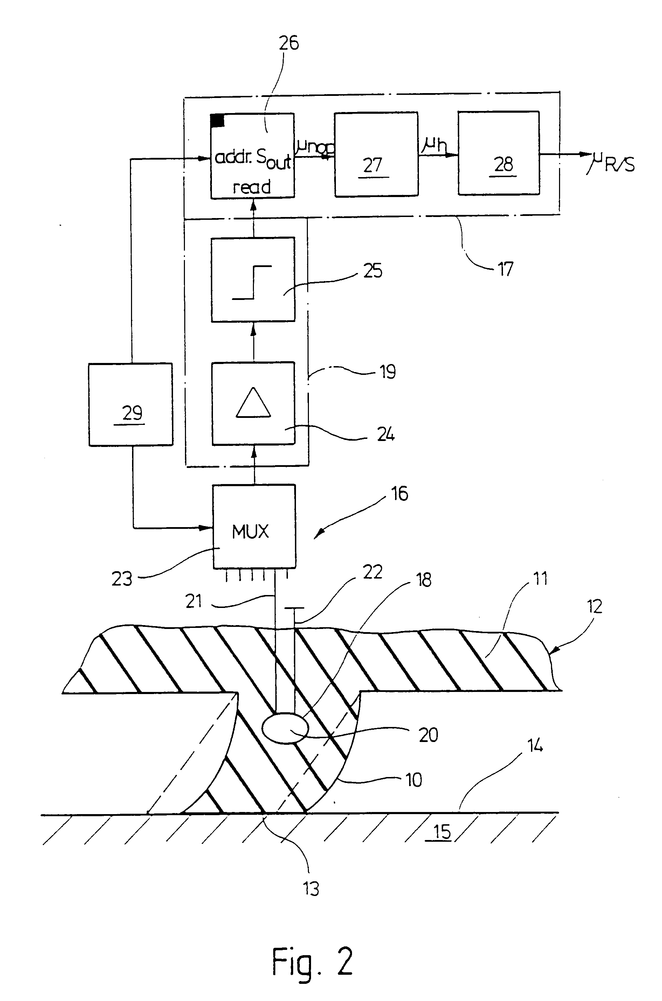

Die in Fig. 2 im Blockschaltbild dargestellte Vorrichtung zum Bestimmen der Haftreibung bzw. des Haftreibungskoeffizienten oder Haftreibungsbeiwertes µ_{R/S} zwischen einem auf einer Fahrbahn 15 (Straße S) sich abrollenden Fahrzeugreifen 12 (Reifen R) und der Fahrbahndecke 14 weist eine Vielzahl von Meßnoppen 10 auf, die im Reifenprofil 11 eines Fahrzeugreifens 12 enthalten sind. In Fig. 1 sind in einem Ausschnitt eines Reifenprofils 11 eines Fahrzeugreifens 12 insgesamt fünf Meßnoppen 101 - 105 aus einer Vielzahl von Meßnoppen 10 dargestellt. Alle Meßnoppen 10 besitzen eine gleich große Auflagefläche 13, mit welcher sie auf der Fahrbahndecke 14 der Fahrbahn oder Straße 15 abrollen. Wie in Fig. 1 am Noppen 101 dargestellt ist, tritt aufgrund der Auflagekraft F_{ges} an der Auflagefläche 13 eine tangentiale Kraftkomponente Fₓ und eine vertikale Kraftkomponente F_{z} auf. Das Verhältnis der Kraftkomponenten F_{z}/Fₓ = µₙₒₚ hängt von der Geometrie der Meßnoppen 10 ab, genauer gesagt bei gleicher Ausbildung von der unterschiedlichen Neigung ihrer Längsachsen zur Auflagefläche 13. In Fig. 1 weist jeder Meßnoppen 101 - 105 einen unterschiedlichen Neigungswinkel zur Fahrbahndecke 14 auf, so daß jedem Meßnoppen 101 - 105 ein definierter Reibungskoeffizient µₙₒₚ zugeordnet ist. Die Werte der Reibungskoeffizienten µₙₒₚ nehmen dabei vom Meßnoppen 101 bis zum Meßnoppen 105 in festen Intervallen zu. Ist nun der Haftreibungskoeffizient µₕ zwischen dem individuellen Meßnoppen 10 und der Fahrbahndecke 14 kleiner als der durch die Noppengeometrie bedingte Reibungskoeffizient µₙₒₚ, so verschiebt sich die Auflagfläche 13 dieses Meßnoppens 10 beim Abrollen des Fahrzeugreifens 12 relativ zur Fahrbahndecke 14. Der Meßnoppen 10 gleitet. Ist hingegen der Haftreibungskoeffizient µₕ zwischen dem Meßnoppen 10 und der Fahrbahndecke 14 größer als der Reibungskoeffizient µₙₒₚ, so verschiebt sich beim Abrollen des Fahrzeugreifens 12 auf der Straße 15 die Auflagefläche 13 des Meßnoppens 1o nicht. Bei der festgelegten Geometrie der Meßnoppen 10 hängt somit das Gleiten oder Nichtgleiten der Meßnoppen 10 von dem momentanen Haftreibungskoeffizienten µₕ ab.

Die Vorrichtung weist deshalb eine Sensoreinheit 16 auf, die den Gleitzustand der Meßnoppen 10 zu erfassen vermag und somit die gleitenden Meßnoppen 10 innerhalb der Vielzahl von Meßnoppen 10 detektiert. Diejenigen Meßnoppen 10, bei welcher ein Gleitzustand vorliegt, werden einer Auswerteeinheit 17 mitgeteilt. Die Auswerteeinheit 17 bestimmt aus der Anzahl der gleitenden Meßnoppen 10 denjenigen Meßnoppen mit dem zugeordneten größten Reibungskoeffizienten µₙₒₚ. Dieser Wert des maximalen Reibungskoeffizienten µ_{nop,max} ist dem tatsächlichen Haftreibungskoeffizienten µₕ zwischen Meßnoppen 10 und Fahrbahndecke 14 am stärksten angenähert. Mit diesem maximalen Reibungskoeffizienten µ_{nop,max} berechnet die Auswerteeinheit 17 den momentanen Haftreibungskoeffizienten µ_{R/S} zwischen Fahrzeugreifen 12 und Fahrbahndecke 14. Ausreichend genau wird diese Haftreibungskoeffizient µ_{R/S} als halber Wert des maximalen Reibungskoeffizienten µ_{nop,max} bestimmt. Sind genauere Werte erforderlich, so werden in der Auswerteeinheit 17 Tabellen abgelegt, die den Zusammenhang zwischen dem Haftreibungskoeffizienten µₕ zwischen Meßnoppen 10 und Fahrbahndecke 14 und dem Haftreibungskoeffizienten µ_{R/S} zwischen Fahrzeugreifen 12 und Fahrbahndecke 14, ggf. unter Berücksichtigung der Fahrgeschwindigkeit, angeben. Diese Tabellen sind empirisch ermittelt, z.B. über die Ausmessung von ABS-Bremsungen. Mit dem von der Auswerteeinheit 17 ermittelten Haftreibungskoeffizienten µₕ wird dann mittels der Tabellen der Haftreibungskoeffizienten µ_{R/S} berechnet.

In dem Ausführungsbeispiel der Vorrichtung gemäß Fig. 2 weist die Sensoreinheit 16 eine Vielzahl von jeweils einem Meßnoppen 10 zugeordneten elektrischen Gleitfühlern 18 und eine mit den Gleitfühlern 18 verbundene Meßvorrichtung 19 auf. Jeder Gleitfühler 18 besteht aus einer in den Meßnoppen 10 eingeschlossenen Einlagerung 20 aus einem Konglomerat elektrisch leitfähigen Materials, dessen elektrischer Widerstand druckabhängig ist. Jede Einlagerung 20 ist über zwei Elektroden 21,22 mit der Meßvorrichtung 19 verbunden. Der größte Druck auf die Einlagerung 20 entsteht im Falle des nichtgleitenden, unter Auflagedruck stehenden Meßnoppens 10, wie er in Fig. 2 ausgezogen dargestellt ist. Im Gleitzustand, in Fig. 2 strichliniert dargestellt, wird ein geringerer Druck auf die Einlagerung 20 ausgeübt. Beim Übergang des Meßnoppens 10 von dem nichtgleitenden in den gleitenden Zustand tritt somit eine Widerstandsänderung, genauer gesagt eine Widerstandsreduzierung, auf, die von der Meßvorrichtung 19 ausgewertet wird.

Im einzelnen sind alle Gleitfühler 18 in den Meßnoppen 10 an einem Muliplexer 23 angeschlossen, der sukzessive in einer vorgegebenen Reihenfolge alle Gleitfühler 18 an den Eingang der Meßvorrichtung 19 legt. Die Meßvorrichtung 19 weist einen Differenzverstärker 24 und einen Schwellwertkomparator 25 auf. Der Ausgang des Schwellwertkomparators 25 ist mit der Auswerteeinheit 17 verbunden, die einen Speicher 26, einen Maximumdetektor 27 und eine Rechenwerk 28 umfaßt. In dem Speicher 26 sind alle Reibungkoeffizienten µₙₒₚ, die der Vielzahl der im Reifenprofil 11 vorhandenen Meßnoppen 10 zugeordnet sind, unter Adressen abgelegt. Ein Adressgenerator 29 legt eine Ausleseadresse an den Speicher 26, während ein Ausgangssignal des Schwellwertkomparators 25 als Auslesebefehl an den Speicher 25 gelangt. Der Adressgenerator 29 steuert den Multiplexer 23 so, daß immer derjenige Gleitfühler 18 an die Meßvorrichtung 19 angeschlossen ist, der in dem in Speicher 26 jeweils adressierten Meßnoppen 10 angeordnet ist.

Die Meßvorrichtung gemäß Fig. 2 arbeitet wie folgt:

Die Gleitfühler 18 werden sukzessive durch den Multiplexer 23 mit der Meßvorrichtung 19 verbunden. Die Steuerung des Multiplexers 23 erfolgt durch den Adressgenerator 29 der adressynchron den Speicher 26 steuert. Solange alle Meßnoppen 10 nicht gleiten, besitzen die Einlagerungen 20 etwa in den gleichen Widerstand, und alle Gleitfühler 18 liefern annähernd ein gleiches Meßsignal, so daß die Differenz am Eingang des Differenzverstärkers 24 annähernd Null ist. Ist ein Meßnoppen 10 in den Gleitzustand übergegangen und nimmt die in Fig. 2 strichlinierte Stellung ein, so sinkt der Widerstand der Einlagerung 20 und am Eingang des Differenzverstärkers 20 liegt ein Differenzsignal, das verstärkt dem Schwellkomparator 25 zugeführt wird. Der Schwellwertkomparator 25 vergleicht das Differenzsignal mit einem vorgegebenen Schwellwert. Wird dieser überschritten, so wird ein Auslesebefehl an den read-Eingang des Speichers 26 gelegt. Aus dem Speicher 26 wird der Wert des Reibungskoeffizienten µₙₒₚ ausgelesen, der dem Meßnoppen 10 zugehörig ist, desseen Gleitfühler 18 momentan von dem Multiplexer 23 an der Meßvorrichtung 19 angeschlossen ist. Der ausgelesene Wert des Reibungskoeffizienten µₙₒₚ wird im Maximumdetektor 27 mit dem zuvor von dem Speicher 26 ausgegebenen Wert des Reibungskoeffizienten µₙₒₚ eines ebenfalls gleitenden Meßnoppens 10 verglichen. Der jeweils größere Wert wird im Maximumdetektor 27 abgespeichert und wiederum mit dem vom Speicher 26 nachfolgend ausgegebenen Reibungskoeffizienten µₙₒₚ verglichen. Nach einem Meßdurchlauf, in dem alle Gleitfühler 18 einmal durch den Multiplexer 23 mit der Meßvorrichtung 19 verbunden worden sind, wird der im Maximumdetektor 27 abgespeicherte maximale Wert des Reibungskoeffizienten µ_{nop,max} an das Rechenwerk 28 gegeben, das - wie vorstehend bereits kurz beschrieben - aus diesen, für den momentanen Haftreibungskoeffizienten µₕ zwischen Meßnoppen 10 und Fahrbahndecke 14 charakteristischen Wert des Reibungskoeffizientens µ_{nop,max} die momentane Haftreibung µ_{R/S} zwischen Fahrzeugreifen 12 und Fahrbahndecke 14 berechnet.

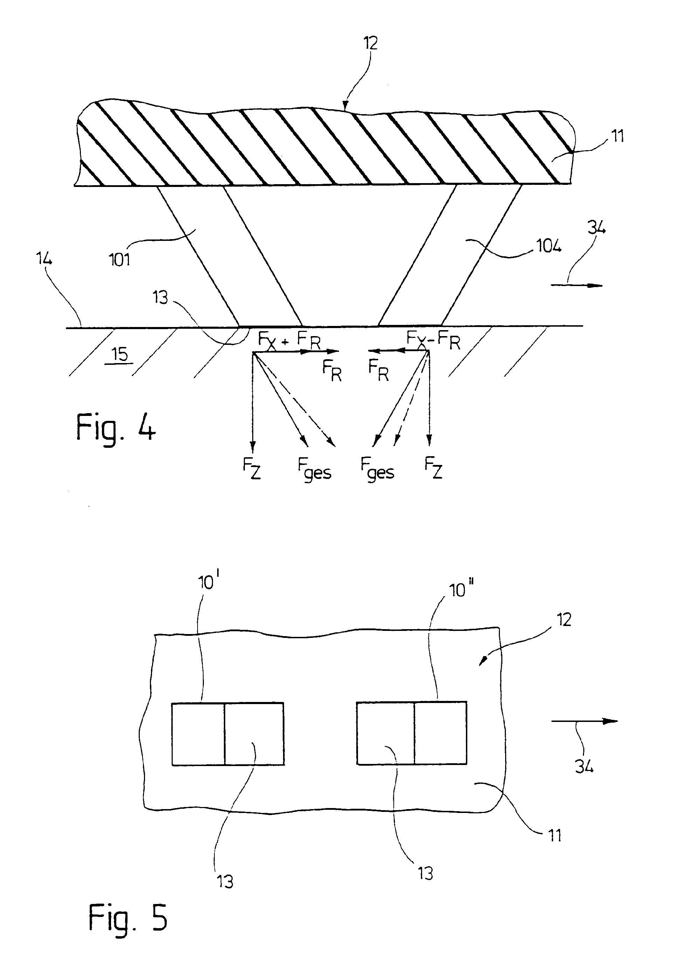

In Fig. 3 ist ein weiteres Ausführungsbeispiel einer Vorrichtung zur Bestimmung der Haftreibung skizziert. Die Sensoreinheit 16 sensiert hier die Verschiebung der Auflageflächen 14 der Meßnoppen 10 innerhalb des Reifenprofils 11 als charakteristische Kenngröße für den Gleitzustand der Meßnoppen 10 in einer anderen Weise als bei der Vorrichtung in Fig. 2. Zwei Meßnoppen 106,107 sind jeweils einander räumlich zugeordnet. Die beiden Meßnoppen 106,107 weisen eine gleiche Noppengestaltung auf, so daß ihnen der gleiche Reibungskoeffizient zugehörig ist, sind aber mit in Reifenabrollrichtung gegenläufiger Neigungsrichtung angeordnet. Auf einander zugekehrten Flächen tragen die Meßnoppen 106,107 jeweils ein Kontaktelement 31,32 eines Schaltkontakts 30. Der Schaltkontakt 30 ist jeweils in einer Verbindungsleitung zwischen einem Signalgenerator 33 und den Eingängen des Multiplexers 23 angeordnet. Der Ausgang des Multiplexers 23 ist unmittelbar mit der Auswertevorrichtung 17 verbunden, die identisch ausgebildet ist wie in Fig. 2. Die Adressierung des Multiplexers 23 und des Speichers der Auswerteeinheit 17 erfolgt wiederum durch den Adressgenerator 29 in synchroner Weise, so daß im Speicher der Auswerteeinheit 17 immer derjenige Wert des Reibungskoeffizienten µₙₒₚ des Meßnoppenpaares 106,107 adressiert ist, dessen Schaltkontakt 30 monentan in der Verbindung zwischen Signalgenerator 33 und Auswerteeinheit 17 liegt.

Im nichtgleitenden Zustand des Meßnoppenpaares 106,107 weisen die Kontaktelemente 31,32 einen vorbestimmten Abstand voneinander auf, der Schaltkontakt 30 ist geöffnet. Gleiten die beiden Meßnoppen 106,107, so bewegen sich ihre Auflageflächen 14 aufeinander zu und der Schaltkontakt 30 wird geschlossen. Damit legt der Signalgenerator 33 über den Multiplexer 23 einen Auslesebefehl an den Speicher der Auswerteeinheit 17. Der dem Meßnoppenpaar 106,107 zugeordnete Reibungskoeffizient µₙₒₚ wird aus dem Speicher ausgelesen und dem Maximumdetektor der Auswerteeinheit 17 zugeführt. Die Auswerteeinheit 17 arbeitet in gleicher Weise wie zu Fig. 2 beschrieben.

Um bei der Bestimmung des Haftreibungskoeffizienten µ_{R/S} zwischen Fahrzeugreifen 12 und Fahrbahndecke 14 den verfälschenden Einfluß äußerer Krafteinwirkung auf den Fahrzeugreifen 12, z.B. Seitenbeanspruchung, Brems- und/oder Antriebsbeanspruchung, zu kompensieren, wird eine in Fig. 4 ausschnittweise schematisch dargestellte sog. Differentialanordnung verwendet. Für jeden Reibungskoeffizienten µₙₒₚ, der im Speicher 26 der Auswerteeinheit 17 abgespeichert ist, ist mindestens ein Paar Meßnoppen 10', 10'' im Reifenprofil 11 vorhanden, deren Neigungsrichtung in Reifenabrollrichtung zueinander gegenläufig ist. In dem Meßnoppen 10' addiert sich zur Tangentialkraft Fₓ eine durch Brems- oder Antriebsbeanspruchung erzeugte Radkraft F_{R}, während bei dem Meßnoppen 10'' diese Radkraft F_{R} von der tangentialen Kraft Fₓ subtrahiert wird. In der Auswerteeinheit 17 erfolgt die Bestimmung desjenigen Meßnoppens 10', 10'' mit dem größten Reibungskoeffizienten µ_{nop,max} aus der Anzahl der gleitenden Meßnoppen 10', 10'' jeweils getrennt nach Meßnoppen 10' bzw. 10'' mit gleicher Neigungsrichtung. Der Reibungskoeffizient µₕ zwischen den Meßnoppen 10 und der Fahrbahndecke 14 wird nicht mehr durch den maximalen Reibungskoeffizienten µ_{nop,max} aller Meßnoppen 10 angenähert, sondern durch den Mittelwert des maximalen Reibungskoeffizienten µ_{nop,max} aller Meßnoppen 10' und des maximalen Reibungskoeffizienten µ_{nop,max} aller Meßnoppen 10''. Mit diesem Mittelwert wird dann der Haftreibungskoeffizient µ_{R/S} zwischen Fahrzeugreifen 12 und Fahrbahndecke 14 in der beschriebenen Weise berechnet.

Fig. 5 zeigt eine Unteransicht des in Fig. 4 dargestellten Meßnoppenpaares 10',10'', das in das Reifenprofil 11 des Fahrzeugreifens 12 integriert ist. Mit 13 sind wiederum die Auflageflächen der Meßnoppen 10',10'' auf der Fahrbahndecke 14 bezeichnet.

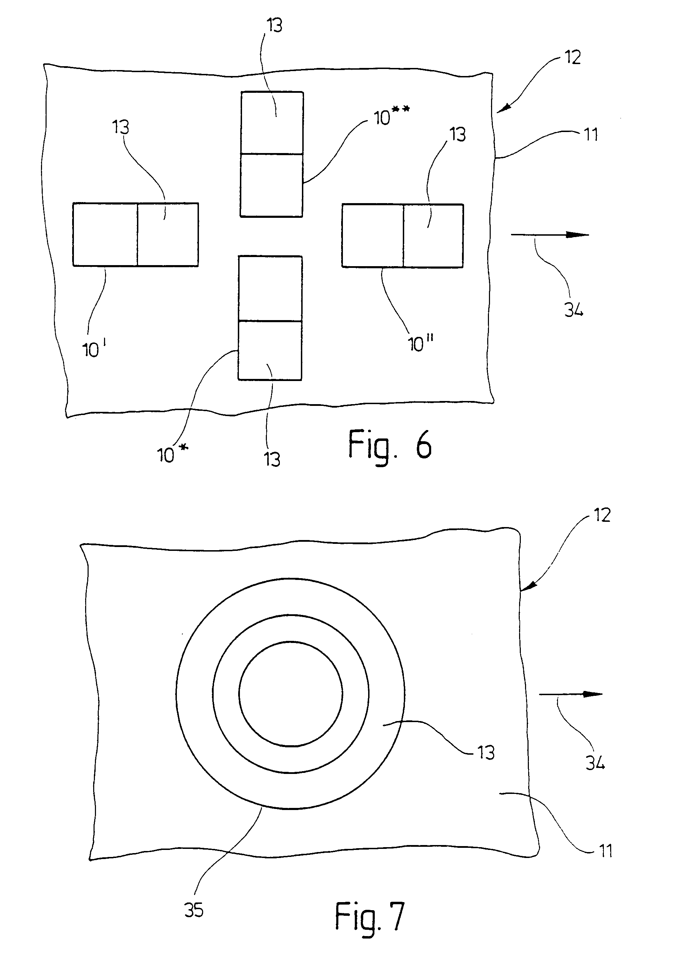

Zur Eliminierung des verfälschenden Einflusses einer Seitenbeanspruchung des Fahrzeugreifens 12 auf die Bestimmung der Haftreibung zwischen dem Fahrzeugreifen 12 und der Fahrbahndecke 14 wird, wie in Fig. 6 schematisch dargestellt ist, für jeden Reibungskoeffizienten µₙₒₚ, der für die Vielzahl der Meßnoppenpaare 10',10'' im Speicher 26 der Auswerteinheit 17 abgespeichert ist, ein weiteres Paar Meßnoppen 10* und 10** vorgesehen, deren Neigungsrichtung quer zur Reifenabrollrichtung zueinander gegenläufig ist. Die Reifenabrollrichtung ist in Fig. 4 - 7 durch einen Pfeil 34 gekennzeichnet. Auch in diesem Fall werden von der Auswerteeinheit die gleitenden Meßnoppen 10*,10** mit dem größten Reibungskoeffizienten µ_{nop,max} für beide Arten von Meßnoppen 10* und 10** getrennt bestimmt und aus den beiden ermittelten maximalen Reibungskoeffizienten der Mittelwert gebildet.

Anstelle der in Fig. 6 vorzusehenden vier Meßnoppen 10',10'',10* und 10** für jeden abgespeicherten Reibungskoeffizienten µₙₒₚ kann - wie in Fig. 7 in Unteransicht dargestellt ist - ein einziger Meßnoppen 35 verwendet werden, der hohlkegelstumpfförmig ausgebildet ist.

Die Auflagefläche 13 dieses Meßnoppens 35 ist ringförmig und stellt sozusagen den Grenzfall der paarigen Anordnung aus vier getrennten Meßnoppen gemäß Fig. 6 dar. Die Verhaltensweise des Meßnoppens 35 im Gleit- bzw. Nichtgleitzustand entspricht identisch derjenigen der in Fig. 6 beschriebenen Meßnoppenanordnung aus jeweils vier zueinander rechtwinklig ausgerichteten Meßnoppen 10',10'',10*,10**. Die Auswertung in der Auswerteeinheit erfolgt ebenfalls in identischer Weise.

Die Erfindung ist nicht auf die beschriebenen Ausführungsbeispiele beschränkt. So kann die Sensoreinheit 16 das Verschieben der Auflageflächen 13 der Meßnoppen 10 innerhalb des Reifenprofils 11 als Charakteristikum ihres Gleitzustands auch durch Messen der elastischen Verformung der Meßnoppen 10, z.B. mittels Dehnungsmeßstreifen, sensieren. Zweckmäßigerweise bilden wiederum zwei Meßnoppen 10 gleicher Noppengestaltung aber in Reifenabrollrichtung gegenläufiger Neigungsrichtung ein Noppenpaar. Jeder Meßnoppen 10 trägt eine Dehnungsmeßstreifen. Der Unterschied der elastischen Verformung in den beiden Meßnoppen 10 des Noppenpaares wird zur Erkennung des Gleitzustandes des Noppenpaares ausgewertet.

## Patentansprüche

1. Vorrichtung zum Bestimmen der Haftreibung zwischen einem auf einer Fahrbahn sich abrollenden Fahrzeugreifen und der Fahrbahndecke, dadurch gekennzeichnet, daß im Reifenprofil (11) eine Vielzahl von Meßnoppen (10) angeordnet ist, denen aufgrund ihrer geometrischen Gestaltung jeweils ein definierter Reibungskoeffizient (µₙₒₚ) zugeordnet ist, der durch das Verhältnis der Normalkomponente (F_{z}) zur Tangentialkomponente (Fₓ) des vom Meßnoppen (10) in die Fahrbahn (15) eingeleiteten Auflagedrucks festgelegt ist, wobei die Reibungskoeffizienten (µₙₒₚ) der Meßnoppen (10) gegeneinander, vorzugsweise um gleiche Intervalle, abgestuft sind, daß eine Sensoreinheit (16) vorgesehen ist, die diejenigen Meßnoppen (10) erfaßt, die während des Abrollens des Fahrzeugreifens (12) relativ zur Fahrbahndecke (14) gleiten, und daß eine Auswerteeinheit (17) vorgesehen ist, die aus der Anzahl der gleitenden Meßnoppen (10) den Meßnoppen (10) mit dem zugeordneten größten Reibungskoeffizienten (µ_{nop,max}) bestimmt und mit diesem, für den momentanen Haftreibungskoeffizienten (µₕ) zwischen Meßnoppen (10) und Fahrbahndecke (14) charakteristischen Reibungskoeffizienten (µ_{nop,max}) die momentane Haftreibung (µ_{R/S}) zwischen Fahrzeugreifen (12) und Fahrbahndecke (14) berechnet.

2. Vorrichtung nach Anspruch 1, dadurch gekennzeichnet, daß alle Meßnoppen (10) die gleiche Auflageflächen (13) aufweisen und daß ihre unterschiedlichen Reibungskoeffizienten (µₙₒₚ) durch unterschiedliche Neigung ihrer Längsachsen zur Auflagefläche (13) eingestellt sind.

3. Vorrichtung nach Anspruch 1 oder 2, dadurch gekennzeichnet, daß die Sensoreinheit (16) ein Gleiten der Meßnoppen (10) durch mittel- oder unmittelbare Sensierung einer Verschiebung der Auflageflächen (13) der Meßnoppen (10) innerhalb des Reifenprofils (11) erfaßt.

4. Vorrichtung nach Anspruch 3, dadurch gekennzeichnet, daß jeweils zwei Meßnoppen (106,107) mit in Reifenabrollrichtung gegenläufigem Neigungsrichtung aber sonst gleicher Noppengestaltung einander räumlich unmittelbar zugeordnet sind und daß die Sensoreinheit (16) eine Abstandsänderung zwischen den Auflageflächen (13) des Noppenpaares (106,107) als Kriterium für den Gleitzustand der Meßnoppen (106,107) detektiert.

5. Vorrichtung nach Anspruch 4, dadurch gekennzeichnet, daß die Sensoreinheit (16) eine Vielzahl von jeweils einem Noppenpaar zugeordneten, in einem elektrischen Schaltkreis angeordneten Schaltkontakten (30) aus jeweils zwei Kontaktelementen (31,32) aufweist, von denen jeweils eines an einem Meßnoppen (106,107) eines Noppenpaares auf einander zugekehrten Seiten angeordnet ist, und daß die Anordnung der Meßnoppen (106,107) des Noppenpaares so getroffen ist, daß bei einer Abstandsänderung der Auflageflächen (13) des Noppenpaares der Schaltkontakt (30) schließt.

6. Vorrichtung nach Anspruch 4, dadurch gekennzeichnet, daß die Sensoreinheit (16) Mittel zur Messung der elastischen Verformung der Meßnoppen, z.B. Dehnungsmeßstreifen, aufweist und den Unterschied der elastischen Verformung in den beiden Meßnoppen (106,107) des Noppenpaares als Kriterium für den Gleitzustand der Meßnoppen auswertet.

7. Vorrichtung nach Anspruch 2 oder 3, dadurch gekennzeichnet, daß für jeden Wert des Reibungskoeffizienten (µₙₒₚ) mindestens ein Paar Meßnoppen (10',10'';10*,10**) vorhanden ist, deren Neigungsrichtung in Reifenabrollrichtung (34) und/oder quer dazu zueinander gegenläufig ist, und daß die Auswerteeinheit (17) die Bestimmung des Meßnoppens (10',10'') mit dem größten Reibungskoeffizienten (µ_{nop,max}) aus der Anzahl der gleitenden Meßnoppen (10',10'';10*,10**) jeweils getrennt nach Meßnoppen (10' bzw.10'';10* bzw.10**) mit der gleichen Neigungsrichtung vornimmt und zur Berechnung der momentanen Haftreibung (µ_{R/S}) zwischen Fahrzeugreifen (12) und Fahrbahndecke (14) den Mittelwert der bestimmten maximalen Reibungskoeffizienten (µ_{nop,max}) der Meßnoppen (10',10'';10*,10**) heranzieht.

8. Vorrichtung nach Anspruch 7, dadurch gekennzeichnet, daß die Meßnoppenpaare durch eine hohlkegelstumpfförmige Noppenausbildung (35) realisiert ist.

9. Vorrichtung nach einem der Ansprüche 3,7 oder 8, dadurch gekennzeichnet, daß die Sensoreinheit (16) eine Vielzahl von jeweils einem Meßnoppen (10) zugeordnete elektrische Gleitfühler (18) und eine mit diesen verbundene Meßvorrichtung (19) aufweist, daß jeder Gleitfühler (18) aus einer in dem Meßnoppen (10) eingeschlossenen Einlagerung (20) eines elektrisch leitfähigen Materials besteht, dessen elektrischer Widerstand druckabhängig ist, und daß die Meßvorrichtung (19) die Widerstandsänderung aller Gleitfühler (18) mißt, mit einem Schwellwert vergleicht und die Schwellwertüberschreitung als Gleitzustand des Meßnoppens (10) interpretiert.

## Claims

1. Device for determining the friction between a vehicle tyre rolling on a carriageway and the carriageway surface, characterised in that arranged in the tyre profile (11) is a multiplicity of measuring knobs (10) to which in each case a defined coefficient of friction (µₙₒₚ) is assigned by virtue of their geometric shape, which coefficient of friction is determined by the ratio of the normal component (F_{z}) to the tangential component (Fₓ) of the supporting pressure introduced by the measuring knob (10) in the carriageway (15), the coefficients of friction (µₙₒₚ) of the measuring knobs (10) being stepped with respect to one another, preferably by identical intervals, in that a sensor unit (16) is provided which detects those measuring knobs (10) which slip during the rolling of the vehicle tyre (12) relative to the carriageway surface (14), and in that an evaluation unit (17) is provided which determines from the number of slipping measuring knobs (10) the measuring knob (10) with the greatest assigned coefficient of friction (µ_{nop,max}) and with this coefficient of friction (µ_{nop,max}) which is characteristic for the momentary coefficient of friction (µₕ) between measuring knob (10) and carriageway surface (14) calculates the momentary friction (µ_{R/S}) between vehicle tyre (12) and carriageway surface (14).

2. Device according to Claim 1, characterised in that all the measuring knobs (10) have the same contact areas (13), and in that their different coefficients of friction (µₙₒₚ) are adjusted by means of different inclination of their longitudinal axis with respect to the contact area (13).

3. Device according to Claim 1 or 2, characterised in that the sensor unit (16) detects a slipping of the measuring knobs (10) by indirect or direct sensing of a displacement of the contact areas (13) of the measuring knobs (10) within the tyre profile (11).

4. Device according to Claim 3, characterised in that in each case two measuring knobs (106, 107) having opposite directions of inclination in the tyre rolling direction but otherwise identical knob shape are directly assigned to one another spatially, and in that the sensor unit (16) detects a spacing change between the contact areas (13) of the knob pair (106, 107) as a criterion for the slipping state of the measuring knobs (106, 107).

5. Device according to Claim 4, characterised in that the sensor unit (16) has a multiplicity of switch contacts (30) assigned in each case to one knob pair, arranged in an electrical circuit and consisting in each case of two contact elements (31, 32), of which in each case one is arranged on a measuring knob (106, 107) of a knob pair on mutually facing sides, and in that the arrangement of the measuring knobs (106, 107) of the knob pair is made in such a way that given a spacing change of the contact areas (13) of the knob pair the switch contact (30) closes.

6. Device according to Claim 4, characterised in that the sensor unit (16) has means for measuring the elastic deformation of the measuring knobs, for example foil strain gauges, and evaluates the difference of the elastic deformation in the two measuring knobs (106, 107) of the knob pair as a criterion for the slipping state of the measuring knobs.

7. Device according to Claim 2 or 3, characterised in that for each value of the coefficient of friction (µₙₒₚ) there is at least one pair of measuring knobs (10', 10''; 10*, 10**) whose directions of inclination in the tyre rolling direction (34) and/or transversely thereto are opposite to one another, and in that the evaluation unit (17) carries out the determination of the measuring knob (10', 10'') with the greatest coefficient of friction (µ_{nop,max}) from the number of slipping measuring knobs (10', 10''; 10*, 10**) in each case separately according to measuring knob (10' or 10'', 10* or 10**) with the same direction of inclination, and in order to calculate the momentary friction (µ_{R/S}) between vehicle tyre (12) and carriageway surface (14) uses the mean value of the specific maximum coefficient of friction (µ_{nop,max}) of the measuring knobs (10', 10''; 10*, 10**).

8. Device according to Claim 7, characterised in that the measuring knob pairs are realised by a hollow truncated cone-shaped knob construction (35).

9. Device according to one of Claims 3, 7 or 8, characterised in that the sensor unit (16) has a multiplicity of electrical slip sensors (18) assigned in each case to one measuring knob (10) and a measuring device (19) connected to the said slip sensors, in that each slip sensor (18) consists of an embedded element (20) of an electrically conductive material enclosed in the measuring knob (10), the electrical resistance of said material being pressure-dependent, and in that the measuring device (19) measures the resistance change of all the slip sensors (18), compares it with a threshold value and interprets the exceeding of the threshold value as a slipping state of the measuring knob (10).

## Revendications

1. Dispositif pour déterminer l'adhérence entre un pneumatique de véhicule roulant sur une chaussée et le revêtement de la chaussée, dispositif caractérisé en ce qu'une pluralité de noppes de mesure (10) est disposée dans le profil (11) du pneumatique, noppes auxquelles, du fait de leur forme géométrique, est respectivement associé un coefficient de frottement défini (µₙₒₚ) qui est déterminé par le rapport de la composante normale (F_{z}) à la composante tangentielle (Fₓ) de la pression d'appui exercée par les noppes de mesure (10) sur la chaussée (15), tandis que les coefficients de frottement (µₙₒₚ) des noppes de mesure (10) sont étagés les uns par rapport aux autres, de préférence à intervalles égaux, en ce qu'il est prévu une unité de détection (16) qui détecte les noppes de mesure (10) qui, pendant le roulement du pneumatique (12) du véhicule, glissent par rapport au revêtement (14) de la chaussée, et en ce qu'une unité d'exploitation (17) est prévue, qui à partir du nombre des noppes de mesure (10) glissantes, détermine la noppe de mesure (10) à laquelle est associé le plus grand coefficient de frottement (µ_{nop,max}), et avec ce coefficient de frottement (µ_{nop,max}) caractéristique pour le coefficient momentané d'adhérence (µₕ) entre la noppe de mesure (10) et le revêtement (14) de la chaussée, l'adhérence momentanée (µ_{R/S}) entre le pneumatique (12) du véhicule et le revêtement (14) de la chaussée.

2. Dispositif selon la revendication 1, caractérisé en ce que toutes les noppes de mesure (10) ont la même surface d'appui (13) et que leurs coefficients de frottement (µₙₒₚ) sont réglés par l'inclinaison différente de leurs axes longitudinaux par rapport à la surface d'appui (13).

3. Dispositif selon la revendication 1 ou la revendication 2, caractérisé en ce que l'unité de détection (16) détecte un glissement de la noppe de mesure (10) par détection indirecte ou directe d'un déplacement de la surface d'appui (13) de la noppe de mesure (10) à l'intérieur du profil (11) du pneumatique.

4. Dispositif selon la revendication 3, caractérisé en ce que respectivement deux noppes de mesure (106, 107) avec un sens d'inclinaison opposé en direction du roulement du pneumatique mais par ailleurs, d'une conformation identique, sont associées directement l'une à l'autre dans l'espace et en ce que l'unité de détection (16) détecte une modification de la distance entre les surfaces d'appui (13) de la paire de noppes (106, 107) comme critère pour l'état de glissement des noppes de mesure (106, 107).

5. Dispositif selon la revendication 4, caractérisé en ce que l'unité de détection (16) comporte une pluralité de contacts de commutation (30) disposés dans un circuit électrique de commutation et respectivement associés à une paire de noppes, contacts de commutation constitués chacun de deux éléments de contacts (31, 32) dont chacun est associé à une noppe de mesure (106, 107) d'une paire de noppes, en étant disposé sur le côté de ces noppes en regard l'un de l'autre, et en ce que la disposition des noppes de mesure (106, 107) de la paire de noppes est telle que lors d'une modification de la distance des surfaces d'appui (13) de la paire de noppes, le contact de commutation (30) se ferme.

6. Dispositif selon la revendication 4, caractérisé en ce que l'unité de détection (16) comporte des moyens pour mesurer la déformation élastique des noppes de mesure, par exemple des jauges extensomètriques, et exploitent la différence de déformation élastique dans les deux noppes de mesure (106, 107) de la paire de noppes, comme critère pour l'état de glissement des noppes de mesure.

7. Dispositif selon la revendication 2 ou la revendication 3, caractérisé en ce que pour chaque valeur du coefficient de frottement (µₙₒₚ), il y a au moins une paire de noppes de mesure (10', 10''; 10*, 10**) dont les sens d'inclinaison dans la direction de roulement (34) du pneumatique et/ou transversalement à cette direction, sont en sens contraire l'un de l'autre, et en ce que l'unité d'exploitation (17) procède à la détermination de la noppe de mesure (10', 10'') ayant le plus grand coefficient de frottement (µ_{nop,max}) dont le nombre des noppes de mesure glissantes (10', 10''; 10*, 10**) de façon respectivement distincte selon les noppes de mesure (10' ou bien 10''; 10* ou bien 10**) avec le même sens d'inclinaison, est fait appel pour le calcul de l'adhérence momentanée (µ_{R/S}) entre le pneumatique (12) du véhicule et le revêtement (14) de la chaussée, à la valeur moyenne des coefficients maximaux de frottement (µ_{nop,max}) ainsi déterminée des noppes de mesure (10', 10''; 10*, 10**).

8. Dispositif selon la revendication 7, caractérisé en ce que la paire de noppes de mesure est réalisée par une conformation de noppes (35) en forme de tronc de cône creux.

9. Dispositif selon une des revendications 3, 7 ou 8, caractérisé en ce que l'unité de détection (16) comporte une pluralité de détecteurs électriques de glissement (18) associés chacun à une noppe de mesure (10) et un dispositif de mesure (19) relié à ces détecteurs, en ce que chaque détecteur de glissement (18) est constitué par une inclusion (20) dans la noppe de mesure (10) d'un matériau électriquement conducteur dont la résistance électrique dépend de la pression, et en ce que le dispositif de mesure (19) mesure la modification de la résistance de tous les détecteurs de glissement (18), la compare avec une valeur de seuil, et interprète le dépassement de la valeur de seuil comme un état de glissement de la noppe de mesure (10).
